# EUROPEAN PATENT APPLICATION

(11) **EP 4 575 069 A1**
(43) Date of publication of application: **25.06.2025**
(21) Application number: 24214617.3
(22) Date of filing: 21.11.2024
(51) Int. Cl.: D06F 37/20, D06F 37/30, F16C 25/08

(54) **BELT DRIVE SYSTEM FOR A LAUNDRY TREATING APPLIANCE AND LAUNDRY TREATING APPLIANCE WITH SUCH BELT DRIVE SYSTEM**

(30) Priority: 20.12.2023 IT 202300027303
(71) Applicant: ELECTROLUX APPLIANCES AKTIEBOLAG, 105 45 Stockholm (SE)
(72) Inventor: PEROSA, Vittorio, 33080 Porcia (PN) (IT); SCORSIM, Fellipe, Porcia (PN) (IT); Simone, BRUSSOLO, Porcia (PN) (IT)
(74) Representative: Electrolux Group Patents

(57) **Abstract**

The invention relates to a laundry treating appliance (1) comprising a rotatable container (3) apt to receive the laundry, the container (3) being provided with a drive shaft (30) extending along a rotation axis (X) from a side wall of the container (3). The appliance (1) further comprises a belt drive system (40) for transmitting a rotation to the drive shaft (30), wherein the belt drive system (40) comprises a pulley (50) connected in a rotationally fixed manner to the drive shaft (30), a spring element (70) arranged at the inner side (51) of the pulley (50) and a fastening element (80) for removably fastening the spring element (70) to the pulley (50).

## Description

The present invention concerns the field of laundry treating appliances provided with a rotating container and a belt drive system for rotating the container.

In particular, the present invention refers to a laundry washing machine provided with a rotating drum and a belt drive system for rotating the drum.

### BACKGROUND ART

Laundry treating appliances generally comprise an external casing, or cabinet, provided with a rotating container where the laundry is placed.

Laundry treating appliances may comprise laundry washing machines, both common laundry washing machines (i.e. laundry washing machines which can only wash and rinse laundry) and laundry washing-drying machines (i.e. laundry washing machines which can also dry laundry).

In the present description, the term "laundry washing machine" will refer to both a common laundry washing machine and a laundry washing-drying machine.

Laundry washing machines thus generally comprise a cabinet provided with a washing tub supporting a rotatable perforated drum where the laundry to be washed is placed. The drum is preferably rotated by means of a belt drive system. Laundry treating appliances may also comprise laundry drying machines that generally comprise a cabinet provided with a rotating container where laundry to be dried is placed.

EP3663453B1 discloses a laundry washing machine having a rotatable drum with a drive shaft and a belt pulley connected to the drive shaft for rotating the drive shaft along an axis of rotation.

The laundry washing machine comprises a washing tub supporting the rotatable drum. The drive shaft extends through an aperture of the tub and a bearing arrangement is placed at the aperture for receiving and supporting the drive shaft of the drum. In the central portion of the belt pulley, a hub is connected in a rotationally fixed manner to the drive shaft end exiting the bearing arrangement. The hub has a protruding portion which extends in the direction of the axis of rotation to form a cylindrical region on which a spring element is arranged.

The protruding portion of the hub holds the spring element in its position around the hub on the inner portion of the belt pulley. The spring element is compressed between the hub and the bearing arrangement when the hub is connected to the drive shaft.

The belt drive system according to the known technique, nevertheless, revealed some drawbacks.

A drawback posed by the belt drive system of the known art arises during manufacturing of the appliance when components are assembled. In particular, assembling operations require the positioning of the spring element on the protruding portion of the hub (pre-assembling), the alignment of the drive shaft with the hub and the fixed connection of the drive shaft to the hub of the belt pulley, typically using a screw.

During assembling, the spring element may move and eventually fall down if the belt pulley and/or the drive shaft is subjected to unwanted movements/vibrations, both in a manual and an automated assembling process. A particular attention, therefore, needs to be paid during assembling.

Another drawback posed by the belt drive system of the known art lies in that the realization of the hub, normally made of steel, and the protruding portion for the spring element requires a mechanical machining, for example a turning operation.

This negatively affects manufacturing time and/or costs of the belt pulley and eventually of the appliance.

The object of the present invention is therefore to overcome the drawbacks posed by the known technique.

It is an object of the invention to provide a belt drive system in a laundry treating appliance that simplifies assembling operations during manufacturing of the appliance.

It is another object of the invention to provide a belt drive system in a laundry treating appliance that reduces manufacturing time and/or costs compared to laundry treating appliances of known type.

### DISCLOSURE OF INVENTION

The applicant has found that by providing a laundry treating appliance comprising a rotatable container apt to receive the laundry and a belt drive system for transmitting a rotation to a drive shaft of the container, wherein the belt drive system comprises a pulley connected in a rotationally fixed manner to the drive shaft and a spring element arranged at an inner side of the pulley, and by providing a fastening element for removably fastening the spring element to the pulley, it is possible to overcome drawbacks of known techniques.

The present invention relates, therefore, to a laundry treating appliance comprising a rotatable container apt to receive the laundry, the container being provided with a drive shaft extending along a rotation axis from a side wall of the container, the appliance further comprising a belt drive system for transmitting a rotation to the drive shaft, the belt drive system comprising:
- a pulley connected in a rotationally fixed manner to the drive shaft and rotatable by means of a belt coupled to a driving motor, the pulley comprising an inner side facing the container,
- a spring element arranged at the inner side of the pulley, and
- a fastening element for removably fastening the spring element to the pulley.

Advantageously, during assembling operations the spring element can be easily mounted to the pulley to realize a sub-assembly that can be mounted to the drive shaft by preventing any movement of the spring element that could cause its separation from the pulley, so that the sub-assembly may be handled, manually or automatically, without worrying about detachment of the spring element from the pulley.

In a preferred embodiment, the pulley and/or the spring element comprises the fastening element.

Preferably, the pulley comprises a seat for receiving at least a portion of the spring element and the fastening element is associated to the seat.

According to a preferred embodiment, the fastening element comprises a retaining element and the spring element comprises an engaging element configured to be coupled with the retaining element.

In a preferred embodiment, the retaining element comprises a rib that at least partially delimits the seat.

Preferably, the seat and the fastening element are realized in the inner side of the pulley.

According to a preferred embodiment, the seat and the fastening element are realized in a single piece construction with the pulley.

In a preferred embodiment, the pulley comprises two seats and two respective fastening elements associated to the seats. In a further preferred embodiment, the pulley comprises four seats and four respective fastening elements associated to the seats.

In a preferred embodiment, the pulley comprises a plurality of said seats and respective fastening elements associated to the seats.

According to a preferred embodiment, the fastening element realizes a bayonet-type connection.

According to a preferred alternative embodiment, the fastening element realizes a snap-in connection.

In a further preferred alternative embodiment, the fastening element comprises a magnet associated to the pulley and the spring element comprises a magnet and/or a ferromagnetic material or, alternatively, the fastening element comprises a magnet associated to the spring element and the pulley comprises a magnet and/or a ferromagnetic material.

Preferably, the pulley comprises a hub connectable in a rotationally fixed manner to the drive shaft and a body surrounding the hub, wherein the body surrounding the hub is fixedly connected to the hub and rotatable by the belt, wherein the seat and the fastening element are realized in the body of the pulley surrounding the hub.

In a preferred embodiment, the hub is made of metal, preferably made of steel, and/or the body is made of a plastic material.

Preferably, the spring element comprises an annular wave spring or an annular coned-disc spring.

According to a preferred embodiment, the appliance comprises a bearing arrangement supporting the drive shaft, the bearing arrangement being positioned between the side wall of the container and the spring element.

In a preferred embodiment, the spring element has a plurality of contact zones that abut against the bearing arrangement.

Preferably, the bearing arrangement comprises a rolling bearing having an inner race mounted on the drive shaft and an outer race.

The spring element, preferably, has a plurality of contact zones that abut against the surface of the inner race facing the belt pulley.

In a preferred embodiment, the rotatable container is a rotatable perforated drum of a laundry washing machine.

Preferably, the bearing arrangement in housed in a side wall of a washing tub containing the rotatable perforated drum.

According to another aspect, the invention relates to a pulley for a drive shaft of a container in a laundry treating appliance, the pulley comprising a hub connectable to the drive shaft and a body surrounding the hub and the pulley having an inner side facing the container, wherein the body surrounding the hub is provided with a seat for receiving at least a portion of a spring element and provided with a fastening element for removably connecting the spring element to the pulley.

According to a further aspect, the invention relates to a laundry treating appliance comprising a rotatable container apt to receive the laundry, the container being provided with a drive shaft extending along a rotation axis from a side wall of the container, the appliance further comprising a belt drive system for transmitting a rotation to the drive shaft, the belt drive system comprising a belt, a pulley rotatable by the belt, the pulley comprising a hub connectable to the drive shaft and a body surrounding the hub and the pulley having an inner side facing the container, the belt drive system further comprising a spring element arranged in the inner side of the body, wherein the body is provided with a seat for receiving and retaining at least a portion of the spring element.

### BRIEF DESCRIPTION OF THE DRAWINGS

Further characteristics and advantages of the present invention will be highlighted in greater detail in the following detailed description of a preferred embodiment of the invention, provided with reference to the enclosed drawings. In the drawings, corresponding characteristics and/or components are identified by the same reference numbers. In such drawings:
- Figure 1 shows a schematic view of a laundry washing machine according to a preferred embodiment of the invention;

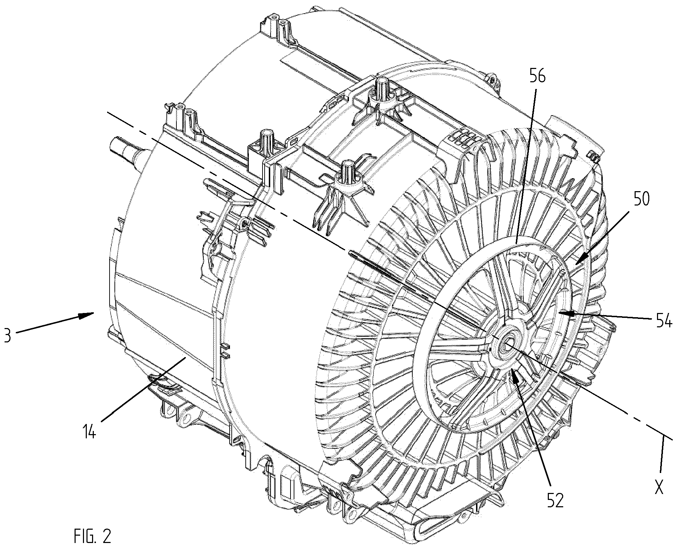

- Figure 2 shows a perspective view of some components of the laundry washing machine of Figure 1;

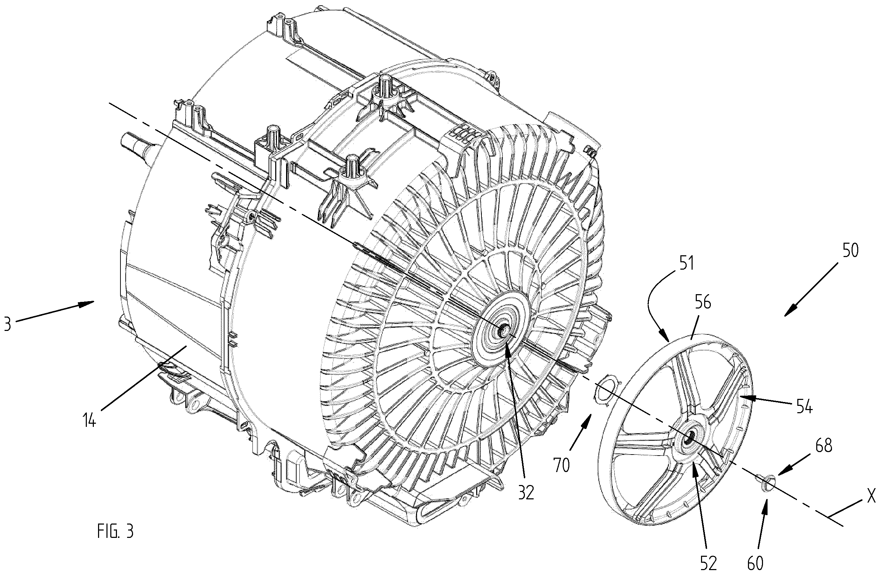

- Figure 3 shows an exploded view of Figure 2;
- Figure 4 shows a plan section view of Figure 2 sectioned along a longitudinal vertical plane;
- Figure 5 shows an enlarged view of a detail of Figure 4;

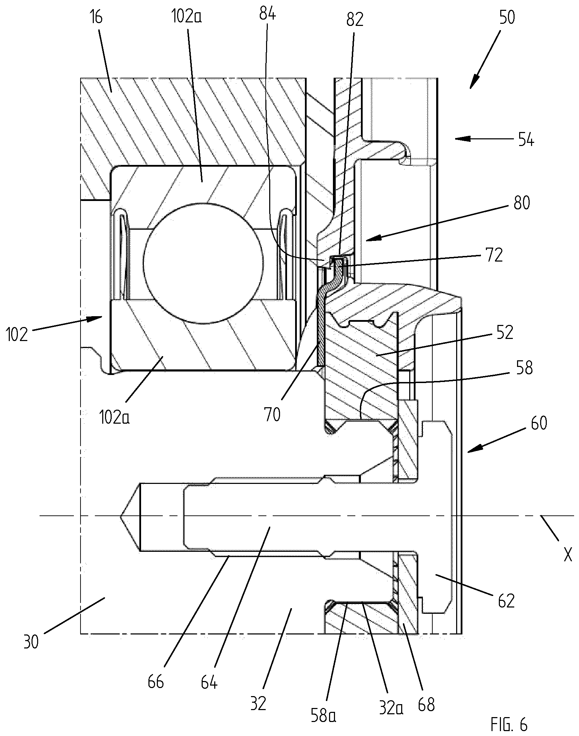

- Figure 6 shows an enlarged view of a detail of Figure 5;

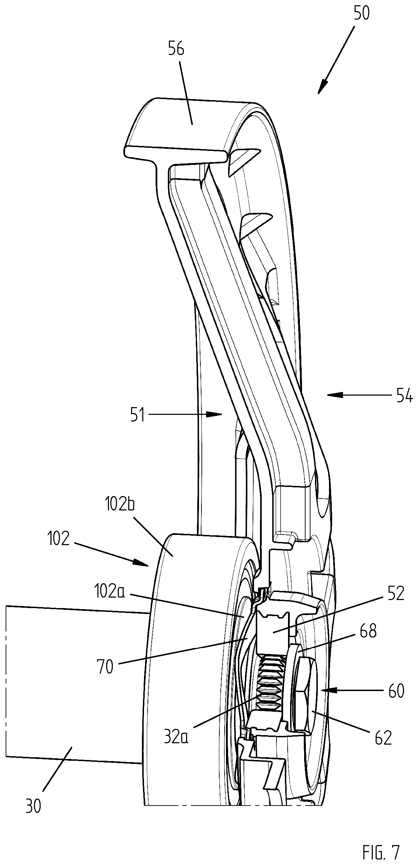

- Figure 7 shows a partial isometric section view of Figure 2;
- Figure 8 shows an enlarged view of a detail of Figure 7;

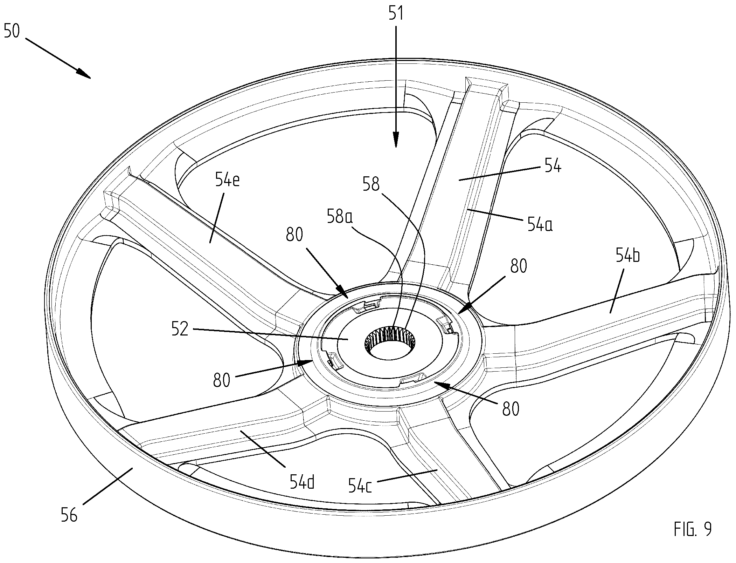

- Figure 9 shows a perspective view of a component of Figure 2 isolated from the rest;
- Figure 10 shows an enlarged view of a detail of Figure 9;

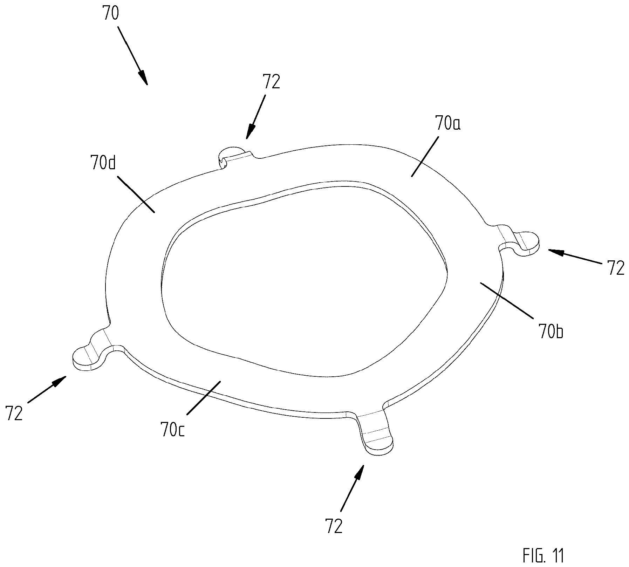

- Figure 11 shows a perspective view of another component of Figure 2 isolated from the rest;
- Figure 12 shows a perspective view of some components of Figure 2 isolated from the rest and in a first configuration during assembling;
- Figure 13 shows the components of Figure 13 in the assembled configuration.

### DETAILED DESCRIPTION OF A PREFERRED EMBODIMENT OF THE INVENTION

The present invention has proved to be particularly advantageous when applied to laundry washing machines, as described below.

The term "laundry washing machine" refers to both a laundry washing machine and a laundry washing-drying machine.

It should in any case be underlined that the present invention is not limited to laundry washing machines. The present invention can be conveniently applied to laundry drying machine.

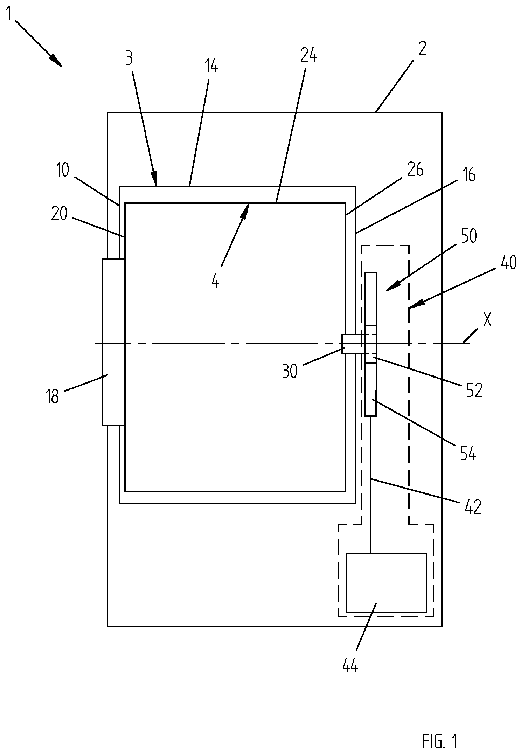

The laundry washing machine 1 according to a preferred embodiment of the invention is schematically illustrated in Figure 1.

The laundry washing machine 1, hereinafter also simply indicated with the term machine 1, is a laundry washing machine of the front-loading type.

The laundry washing machine 1 comprises an external casing or cabinet 2 in which a washing tub 3, or simply tub 3, is fixed to the casing 2, preferably supported by coil springs and shock-absorbers (not shown).

Tub 3 encloses a rotatable container 4 wherein laundry can be loaded to be submitted to a washing process (or also to a drying process in the case of a washing-drying machine). The rotatable container 4 therefore defines a laundry washing drum 4, or simply drum 4, which is located in axially rotating manner inside the tub 3 along a reference rotation axis X.

The tub 3 and the drum 4 both preferably have a substantially cylindrical-shaped, tubular body.

The tub 3 preferably comprises a front side wall 10 provided with a front mouth 12, a lateral substantially cylindrical side wall 14 and a rear side wall 16. A closing door 18 is associated to the front mouth 12.

Preferably, the tub 3 is made of a polymeric material, more preferably of plastic material in an injection moulding process.

The drum 4 preferably comprises a front side wall 20 provided with a front mouth 22, a lateral substantially cylindrical perforated side wall 24 and a rear side wall 26.

Preferably, the drum 4 is made of a metallic material, more preferably of stainless steel.

A drive shaft 30 is fixedly coupled to the drum 4 through which the drum 4 is rotated during the washing (or drying) cycle(s). The drive shaft 30 extends along a rotation axis X from the rear side wall 26 of the drum 4. The rotation axis X of the drive shaft 30 coincides with the reference rotation axis X of the drum 4.

The machine 1 then comprises a belt drive system 40 for transmitting a rotation to the drive shaft 30.

The belt drive system 40 comprises a pulley 50 which can be rotated by means of a belt 42 moved by a motor unit 44.

In the preferred embodiment described and illustrated herein, the drive shaft 30 is preferably rotatably supported at the rear wall 16 of the tub 3 by a bearing arrangement 100 by means of which the drive shaft 30 is rotatably mounted about the rotation axis X.

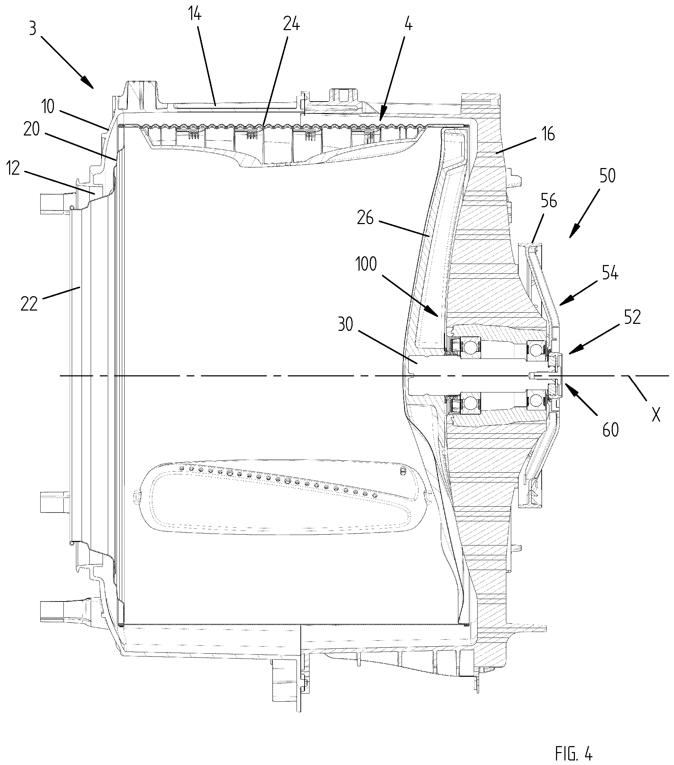

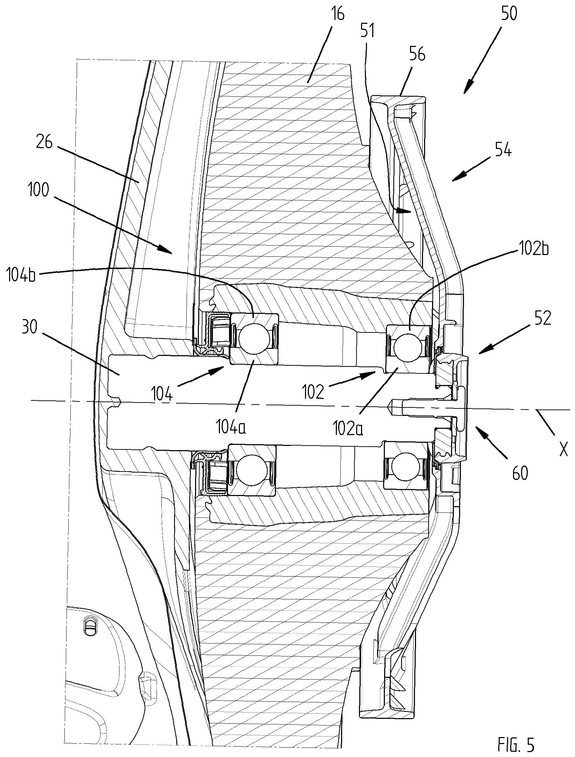

The bearing arrangement 100 is preferably arranged centrally at the rear wall 16 of the tub 3, as better illustrated in Figures 4 and 5.

As shown in figure 5, the bearing arrangement 100 comprises a first rolling bearing 102 and a second rolling bearing 104, spaced apart one to the other, receiving and supporting the drive shaft 30. The first rolling bearing 102 is arranged on the belt drive system side and the second rolling bearing 104 is arranged closer to the drum 4 than the first rolling bearing 102.

The first rolling bearing 102 comprises an inner race 102a mounted on the drive shaft 30 and an outer race 102b which is housed at the rear wall 16 of the tub 3. The second rolling bearing 104 comprises an inner race 104a mounted on the drive shaft 30 and an outer race 104b which is housed at the rear wall 16 of the tub 3.

The drive shaft 30 is preferably divided into regions, each having different diameters. The rolling bearings 102, 104 are preferably arranged in two adjacent regions with different diameters. It follows that the rolling bearings 102, 104 have different sizes/diameters.

A first end 32 of the drive shaft 30 is configured to fit with the pulley 50, as described below.

The pulley 50 preferably comprises a hub 52 for rotatably connecting the pulley 50 in a rotationally fixed manner to the drive shaft 30. The pulley 50 then preferably comprises a body 54 surrounding the hub 52, hereinafter indicated also with the term outer body 54. The outer body 54 is provided with a circular rail 56 receiving the belt 42 so that the belt 42 may rotate the pulley 50 when required. The outer body 54 is preferably realized with five links 54a-54e radially arranged around the hub 52.

Preferably, the hub 52 is made of metal, preferably made of steel, to provide a sufficient level of mechanical strength for the connection to the drive shaft 30, whereas the outer body 54 is preferably made of plastic. Preferably, the outer body 54 is injection-moulded, whereas the hub 52 is over-moulded to the outer body 54.

The hub 52 comprises a hole 58 apt to receive the first end 32 of the drive shaft 30. The hole 58 of the hub 52 and the first end 32 of the drive shaft 30 are preferably provided with serrations 58a, 32a ensuring a firm connection of the pulley 50 to the drive shaft 30.

The pulley 50 is further fixed to the drive shaft 30 by means of a screw 60 having an enlarged head 62 abutting the hub 52 of the pulley 50 and a threaded shank 64 which engages with a threaded hole 66 provided at the first end 32 of the drive shaft 30. A washer 68 is preferably interposed between the enlarged head 62 of the screw 60 and the hub 52 of the pulley 50.

According to a preferred aspect of the invention, the belt drive system 40 further comprises a spring element 70 arranged at an inner side 51 of the pulley 50.

The inner side 51 of the pulley 50 corresponds to the side of the pulley 50 facing the tub.

When the pulley 50 is connected to the drive shaft 30 the spring element 70 is arranged to preferably act on the bearing arrangement 100 with a pressure acting in the direction of the axis of rotation X. Preferably, the spring element 70 is arranged to act on the inner race 102a of the first rolling bearing 102 with a pressure acting in the direction of the axis of rotation X. As a result, the first rolling bearing 102 is prestressed and slight movements of the rolling bearing 102 in the direction of the axis of rotation X are controlled and/or prevented.

According to an aspect of the invention, the pulley system 40 comprises a fastening element 80 for removably fastening the spring element 70 to the pulley 50.

The pulley 50 preferably comprises a seat 82 for receiving at least a portion 72 of the spring element 70, wherein the seat 82 comprises the fastening element 80.

In the preferred embodiment described and illustrated herein, there are preferably provided four seats 82 and four fastening elements 80, all indicated with the same reference number 82, 80. The seats 82 and the fastening elements 80 are preferably equally angularly distributed around the rotation axis X.

In further preferred embodiments, nevertheless, the number of seats and fastening elements and/or their distribution around the rotation axis may be different.

Hereinafter we will refer to one seat 82 and respective fastening element 80, being clear that the description may be extended to the other seats and fastening elements 80 that are substantially identical, apart from their positions in the pulley 50.

The seat 82 is preferably defined by a recessed portion 83 realized in the inner side 51 of the pulley 50. The fastening element 80 is realized as a retaining element 84 which is preferably realized as a rib 84 associated to the seat 82.

The retaining element 84 is also preferably realized in the inner side 51 of the pulley 50. Preferably, the seat 82 and the retaining element 84 are realized in a single piece construction with the pulley 50. More preferably, the seat 82 and the retaining element 84 are realized in a single piece construction with the outer body 54 of pulley 50. Still more preferably, the seat 82 and the retaining element 84 are realized in a single piece construction with the plastic outer body 54 of pulley 50 through an injection-moulded process.

The retaining element 84 at least partially delimits the seat 82.

The spring element 70 comprises an engaging element 72 configured to be coupled with the retaining element 84.

In the preferred embodiment described and illustrated herein, there are preferably provided four engaging elements 72, all indicated with the same reference number 72.

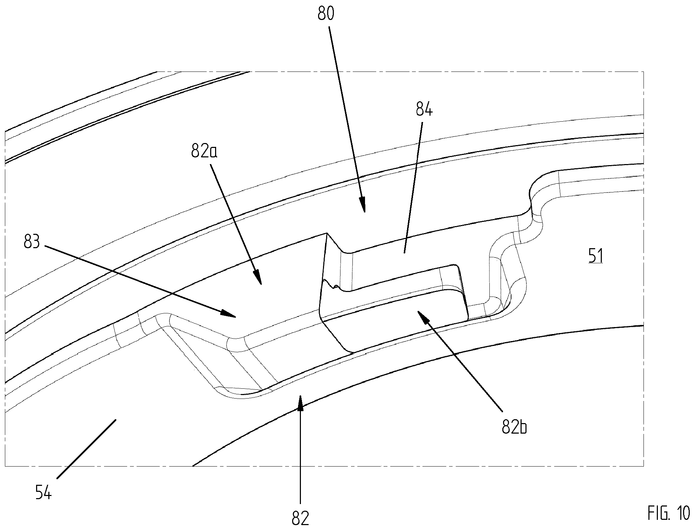

As depicted in Figure 10, the seat 82 preferably comprises a first open portion 82a with a size apt to receive the insertion of the engaging element 72 and a second portion 82b, delimited by the retaining element 84, apt to the receive the engaging element 72.

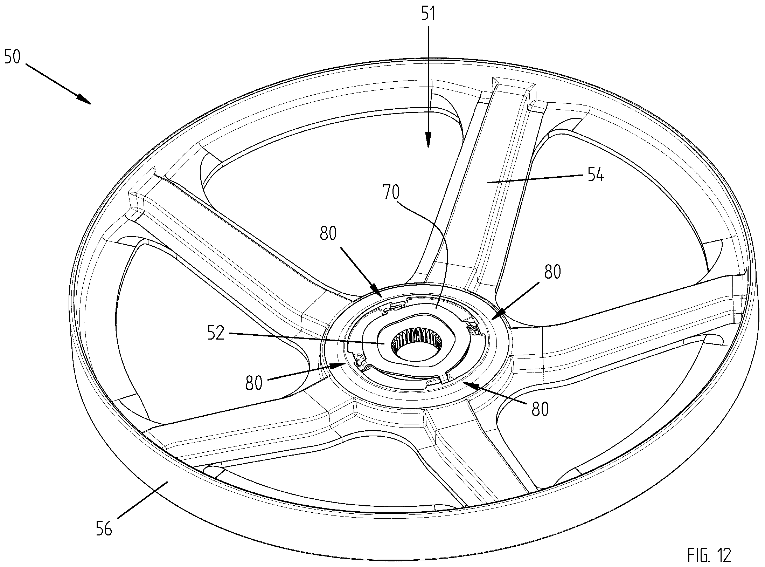

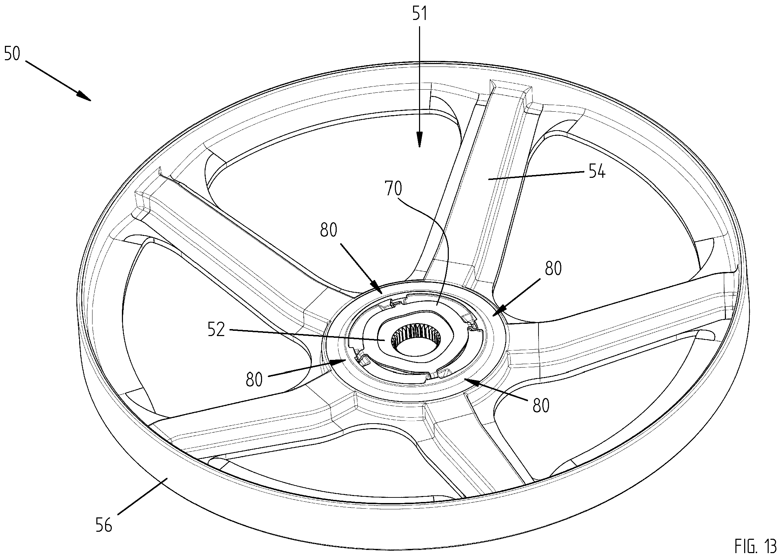

Assembling of the spring element 70 to the pulley 50 requires inserting the engaging elements 72 of the spring element 70 into the first open portions 82a of the seats 82 (as shown in Figure 12) and a subsequent rotation of the spring element 70 so that the engaging elements 72 are arranged in the second portions 82b of the seats 82 and retained therein by the retaining elements 84 (as shown in Figure 13), so that to eventually realize a bayonet-like connection system.

The spring element 70 is preferably designed as an annular wave spring 70 which surrounds the drive shaft 30 with a slight clearance, for example a 1 mm clearance.

The spring element 70 is provided with said engaging elements 72 that are preferably equally angularly distributed around the spring element 70.

The engaging elements 72 preferably comprise respective protruding elements protruding from the annular wave spring 70 in the direction of the pulley 50. Each engaging element 72 preferably comprises a shaped tab 72 protruding from the external circumference of the annular wave spring 70.

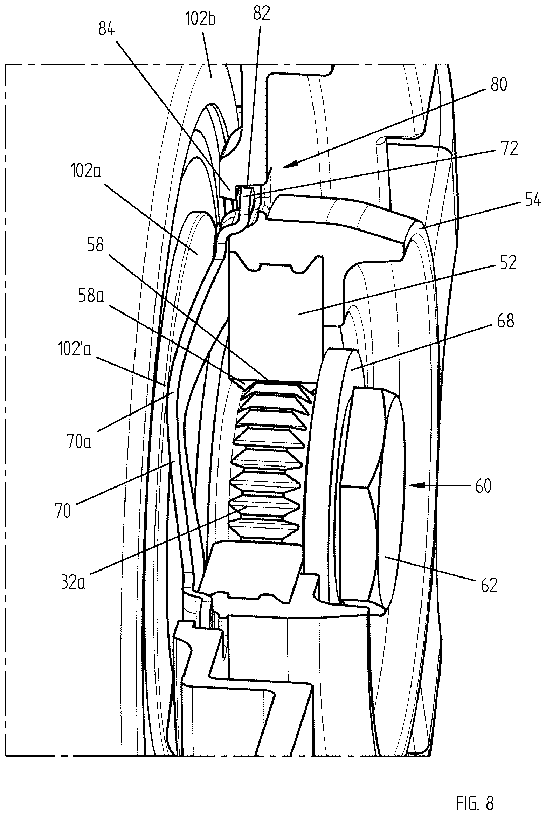

The spring element 70 shows a plurality of contact zones 70a-70d, for example four contact zones 70a-70d, that abut against the surface 102'a of the inner race 102a facing the pulley 50, as illustrated in Figure 8.

In further preferred embodiments, the spring element may be differently shaped, for example it may comprise an annular coned-disc spring, or Belleville spring. According to an advantageous aspect of the invention, the solution described above positively affects manufacturing of the machine 1 when components are assembled.

In particular, assembling operations comprises a pre-assembling step wherein the spring element 70 is mounted to the pulley 50. According to the solution proposed, the spring element 70 is fixed to the pulley 50 thanks to the fastening elements 80, which preferably allows a bayonet-like connection of the spring element 70 to the pulley 50 as described above.

Fixation of the spring element 70 to the pulley 50 realizes a sub-assembly wherein any movement of the spring element 70 and its separation from the pulley 50 is advantageously prevented.

The sub-assembly may then be easily handled, manually or automatically, without worrying about detachment of the spring element 70.

The drive shaft 30, with its first end 32, is then aligned to the hole 58 of the hub 52. The first end 32 of the drive shaft 30 is fitted into the hole 58 of the hub 52 and the screw 60 is finally screwed into the threaded hole 66 at the end 32 of the drive shaft 30.

According to another advantageous aspect of the invention, the removability of the spring element 70 with respect to the pulley 50 is facilitated, for example if replacement of the spring element 70 is required.

In the embodiment of the invention illustrated and described above, the fastening elements 80 preferably realizes a bayonet-type connection.

In different preferred embodiments, the fastening element may be differently configured to realize a different type of connection.

For example, the fastening element may be configured to realize a snap-in connection.

In further preferred embodiments, the fastening element may be configured to realize a connection through a magnetic attraction force.

In a preferred embodiment, the fastening element may comprise a magnet associated to the pulley, for example one or more magnets embedded in the outer body of pulley, and the spring element may comprise a magnet and/or simply may be realized with a ferromagnetic material.

In a further preferred embodiment, the fastening element may comprise a magnet associated to the spring element, for example one or more magnets embedded in the spring element, and the pulley may comprise a magnet and/or simply may be realized with at least a portion of ferromagnetic material.

In the embodiment of the invention illustrated and described above, the pulley comprises a hub and a body surrounding the hub. In different embodiments, the pulley may be realized as a single solid piece, for example a single metallic piece.

It has thus been shown that the present invention allows all the set objects to be achieved. In particular, the belt drive system according to the invention simplifies assembling operations during manufacturing or maintenance of the appliance.

Furthermore, by providing the belt drive system with the spring element which acts directly on the rolling bearing supporting the drive shaft, it is possible to reduce vibrations and axial movements of the rolling bearing with respect to the supported drive shaft.

While the present invention has been described with reference to the particular embodiment shown in the figures, it should be noted that the present invention is not limited to the specific embodiment illustrated and described herein; on the contrary, further variants of the embodiment described herein fall within the scope of the present invention, which is defined in the claims.

## Claims

1. A laundry treating appliance (1) comprising a rotatable container (3) apt to receive the laundry, the container (3) being provided with a drive shaft (30) extending along a rotation axis (X) from a side wall of the container (3), the appliance (1) further comprising a belt drive system (40) for transmitting a rotation to the drive shaft (30), the belt drive system (40) comprising:
- a pulley (50) connected in a rotationally fixed manner to the drive shaft (30) and rotatable by means of a belt (42) coupled to a driving motor (44), the pulley (50) comprising an inner side (51) facing the container (3),
- a spring element (70) arranged at the inner side (51) of the pulley (50), and
- a fastening element (80) for removably fastening the spring element (70) to the pulley (50).

2. Appliance (1) according to claim 1, wherein the pulley (50) and/or the spring element (70) comprises the fastening element (80).

3. Appliance (1) according to claims 1 or 2, wherein the pulley (50) comprises a seat (82) for receiving at least a portion of the spring element (70) and the fastening element (80) is associated to the seat (82).

4. Appliance (1) according to claim 3, wherein the fastening element (80) comprises a retaining element (84) and the spring element (70) comprises an engaging element (72) configured to be coupled with the retaining element (84).

5. Appliance (1) according to claim 3 or 4, wherein the seat (82) and the fastening element (80) are realized in the inner side (51) of the pulley (50).

6. Appliance (1) according to any of the claims 3 to 5, wherein the seat (82) and the fastening element (80) are realized in a single piece construction with the pulley (50).

7. Appliance (1) according to any of the claims 3 to 6, wherein the pulley (50) comprises a plurality of said seats (82) and respective fastening elements (80) associated to the seats (82).

8. Appliance (1) according to any of the preceding claims, wherein the fastening element (80) realizes a bayonet-type connection.

9. Appliance (1) according to any of the preceding claims, wherein the fastening element realizes a snap-in connection.

10. Appliance (1) according to any of the preceding claims, wherein the fastening element comprises a magnet associated to the pulley (50) and the spring element (70) comprises a magnet and/or a ferromagnetic material or the fastening element comprises a magnet associated to the spring element (70) and the pulley (50) comprises a magnet and/or a ferromagnetic material.

11. Appliance (1) according to any of the claims 3 to 10, wherein the pulley (50) comprises a hub (52) connectable in a rotationally fixed manner to the drive shaft (30) and a body (54) surrounding the hub (52), wherein the body (54) surrounding the hub (52) is fixedly connected to the hub (52) and rotatable by the belt (42), wherein the seat (82) and the fastening element (80) are realized in the body (54) of the pulley (50) surrounding the hub (52).

12. Appliance (1) according to any of the preceding claims, wherein the spring element (70) comprises an annular wave spring (70) or an annular coned-disc spring.
